# EUROPÄISCHE PATENTSCHRIFT

(11) **EP 0 669 901 B1**
(45) Veröffentlichungstag und Bekanntmachung des Hinweises auf die Patenterteilung: **12.03.1997**
(21) Anmeldenummer: 93923438.1
(22) Anmeldetag: 23.10.1993
(51) Int. Cl.: C04B 35/48, C04B 35/50, H01M 8/12

(54) **GESINTERTER FESTELEKTROLYT MIT HOHER SAUERSTOFFIONENLEITFÄHIGKEIT**
SINTERED SOLID-STATE ELECTROLYTE WITH HIGH OXYGEN-ION CONDUCTIVITY
ELECTROLYTE SOLIDE FRITTE AYANT UNE HAUTE CONDUCTIVITE D'IONS OXYGENE

(30) Priorität: 17.11.1992 DE 4238688
(43) Veröffentlichungstag der Anmeldung: 06.09.1995
(73) Patentinhaber: ROBERT BOSCH GMBH, 70442 Stuttgart (DE)
(72) Erfinder: FRIESE, Karl-Hermann, D-71229 Leonberg (DE); GRUENWALD, Werner, D-70839 Gerlingen (DE)
(86) Internationale Anmeldenummer: DE9301009
(87) Internationale Veröffentlichungsnummer: WO9411322

(56) Entgegenhaltungen:
- EP-A- 0 134 136
- EP-A- 0 345 824
- EP-A- 0 421 077
- WO-A-91/09430
- DE-A- 2 837 593
- US-A- 5 155 071

## Beschreibung

### Stand der Technik

Metalloxide mit Sauerstoffionenleitfähigkeit werden bekanntlich u.a. in Sensoren verwendet, mit denen die Zusammensetzung von Gasgemischen, wie Abgase von Verbrennungsmotoren, bestimmt wird. Die Leitfähigkeit der hierfür üblichen, beispielsweise mit Magnesiumoxid oder Calciumoxid stabilisierten Metalloxide, wie Zirkon(IV)-oxid, Hafnium(IV)-oxid oder Cer(IV)-oxid, ist jedoch unbefriedigend.

Es ist bekannt, daß sich die Sauerstoffionenleitfähigkeit dieser Metalloxide durch Zusatz bestimmter Oxide dreiwertiger und/oder zweiwertiger Metalle steigern läßt. Bei Zirkon(IV)-oxid beispielsweise wirken Scandium(III)-oxid, Yttrium(III)-oxid sowie die Oxide der schweren seltenen Erden, wie Erbium, Dysprosium und Ytterbium, in diesem Sinne. Man bezeichnet diese Zusätze auch als Stabilisatoren, weil sie die kubische Phase des Zirkon(IV)-oxids bei niedrigen Temperaturen stabilisiert und/oder die tetragonale Phase bei niedrigen Temperaturen metastabil erhält. Beide Phasen weisen eine ausgeprägte Sauerstoffionenleitfähigkeit auf. Der Zusammenhang zwischen Art und Menge des Stabilisators einerseits und Ionenleitfähigkeit andererseits ist beispielsweise von D.W. Strickler und W.G. Carlson in "Electrical Conductivity in the ZrO₂-Rich Region of Several M₂O₃-ZrO₂Systems", J.Am. Ceram.Soc., Vol. 48 (1974), 286, 288 beschrieben.

Für das Molverhältnis von Stabilisator und Zirkon(IV)-oxid gibt es ein Optimum (vgl. Fig. 3 in der zitierten Arbeit). Man spricht dann von Vollstabilisierung. Aber auch teilstabilisiertes Zirkon(IV)-oxid mit geringerem Stabilisatorgehalt wurde bereits in der Gassensortechnik verwendet (DE-A2-28 52 638).

### Vorteile der Erfindung

Das Schichtsystem nach der Erfindung zeigt im Vergleich zu Festelektrolyten aus Ausgangspulvern mit gröberer Teilchenstruktur über weite Temperaturbereiche eine deutlich höhere Ionenleitfähigkeit. Gassensoren mit diesen Festelektrolyten, beispielsweise die bei Verbrennungsmotoren gebräuchlichen λ-Sonden, arbeiten daher auch bei Temperaturen unter 300°C, beispielsweise bei 100 bis 200°C, zuverlässig und reproduzierbar. Das ist wichtig für die Phase unmittelbar nach dem Start des Motors, in der die übliche hohe Abgastemperatur noch nicht erreicht ist.

Weiterhin zeigt das Schichtsystem nach der Erfindung eine geringere Temperaturabhängigkeit der Leitfähigkeit als vergleichbares Elektrolytmaterial aus Ausgangspulvern mit gröberer Kristallstruktur. Das liegt am verstärkten Anteil des Sauerstoffionen-Transports in den Korngrenzen des nanokristallinen Zirkon(IV)-Oxids mit der verminderten Aktivierungsenergie Q_{KB} der Korngrenzendiffusion (Q_{KB} = 0,5 Q_{Gitter}).

λ-Sonden bzw. Gassensoren sowie Brennstoffzellen, Hochtemperaturelektrolysezellen oder Sauerstoffpumpzellen mit den Festelektrolyten nach der Erfindung zeigen wegen der erhöhten Leitfähigkeit der Festelektrolyten und einer verminderten Polarisation der Cermet-Elektroden mit Stützgerüst aus den gesinterten Festelektrolyten eine erhöhte Belastbarkeit. Die Sinteraktivität der Mischoxide, d.h. ihre Fähigkeit, zu mechanisch stabilen Körpern zusammenzusintern, ist infolge der nanokristallinen Struktur der Ausgangsstoffe recht gut und kann durch Zusatz bestimmter neutraler Oxide, wie Aluminiumoxid, ohne nennenswerte Beeinträchtigung der Leitfähigkeit noch gesteigert werden.

Das bevorzugte Anwendungsgebiet der Erfindung sind Schichten oder Schichtsysteme in elektrochemischen Bauelementen. Beipielsweise kann man eine Festelektrolytschicht und eine oder mehrere den Festelektrolyten enthaltende Cermet-Elektroden mit einer porösen keramischen Gasdiffusionsschicht und/oder mit einer porösen Katalysatorschicht kombinieren.

Obwohl Stabilisatoren verwendet werden, die z.T. schwer zugänglich und daher teuer sind, lassen sich mit der Erfindung Bauelemente in wirtschaftlicher Weise herstellen, weil die leitenden Schichten bzw. die Cermet-Elektroden mit leitendem Stützgerüst wegen der hohen Leitfähigkeit entsprechend kleiner sein können.

In fertigungstechnischer Hinsicht ist es vorteilhaft, daß das Schichtsystem der Erfindung sich hervorragend co-sintern läßt. Dazu genügen vergleichsweise niedrige Temperaturen. Wenn die Kationenradien des Stabilisatoroxids und des Oxids des 4-wertigen Metalles deutlich verschieden sind, erhält man schon bei Sintertemperaturen von 1300 bis 1500°C Sinterkörper mit guten mechanischen Eigenschaften, die aber unbefriedigende Sauerstoffionenleitfähigkeit zeigen. Dasselbe gilt für teilstabilisierte Oxide 4-wertiger Metalle. Stimmen die Kationenradien gut überein, bedarf es höherer Sintertemperaturen, um mechanisch stabile Sinterkörper zu erzeugen, die dann aber auch als Festelektrolyte gut brauchbar sind, d.h. gute Sauerstoffionenleitfähigkeit aufweisen. Beispielsweise betragen die Sintertemperaturen bei mit Scandium(III)-oxid stabilisiertem Zirkon(IV)-oxid 1900 bis 2000°C. Geht man erfindungsgemäß von einem Ausgangspulver aus, das im wesentlichen aus Nanokristalliten besteht, so lassen sich die Sintertemperaturen im Vergleich mit konventionellen Pulvern mit Teilchen im µm-Bereich erheblich herabsetzen, und man erhält unter sonst gleichen Bedingungen Sinterkörper, die sowohl in mechanischer Hinsicht als auch in bezug auf die Sauerstoffionenleitfähigkeit hervorragende Eigenschaften besitzen. Durch Co-sintern erhält man feste, mechanisch hoch beanspruchbare Verbindungen zwischen dem metallischem oder oxidischen Substrat und den Festelektrolyten sei es als dünne, sauerstoffionenleitende Schicht, sei es als Stützgerüst in dünnen Cermet-Elektroden.

### Beschreibung der Erfindung

Die gesinterten Festelektrolyte basieren auf Oxiden 4-wertiger Metalle mit Stabilisatoroxiden. Sie können also aus diesen Bestandteilen bestehen oder andere Zusatzstoffe enthalten, wie Aluminiumoxid, das die Sinteraktivität erhöht. Bevorzugte Oxide vierwertiger Metalle sind die üblichen ionenleitenden Oxide, wie Zirkon(IV)-oxid, Hafnium(IV)oxid und Cer(IV)-oxid, jeweils für sich allein oder im Gemisch miteinander.

Die Stabilisatoren werden in das Kristallgitter der Oxide 4-wertiger Metalle eingebaut. Die Ionenradien der Kationen sollten daher möglichst ähnlich sein. Bevorzugte Stabilisatoren sind die Oxide bestimmter dreiwertiger Metalle, insbesondere der III. Nebengruppe des Periodensystems der Elemente. Beispielsweise seien Scandium sowie insbesondere Yttrium und die Oxide der höheren seltenen Erden erwähnt. Unter "höheren seltenen Erden" werden solche mit einer Ordnungszahl >64 verstanden. Als Beispiele seien Erbium(III)-oxid, Dysprosium(III)-oxid und Ytterbium(III)-oxid genannt.

Das für eine Vollstabilisierung mit maximaler Leitfähigkeit erforderliche Molverhältnis von Oxiden 4-wertiger Metalle und Stabilisator hängt von der gewählten Kombination ab und läßt sich gegebenenfalls durch Versuche unschwer ermitteln. Für Zirkon(IV)-oxid liegen die Anteile an Stabilisatoroxid im allgemeinen bei >7 Mol%. Für die spezielle Kombination Zirkon(IV)-oxid/Ytterbium(III)-oxid liegt das Leitfähigkeitsmaximum bei 8 bis 12 Mol% Ytterbium(III)-oxid. Werden teilstabilisierte Festelektrolyte gewünscht, setzt man entsprechend weniger Stabilisator ein. Es ist empfehlenswert, die optimale Menge an Stabilisator nicht zu überschreiten, weil anderenfalls infolge abnehmender Beweglichkeit der Sauerstoffionen die Leitfähigkeit und infolge verminderter Sinteraktivität des Ausgangsgemisches die Sinterdichte und die mechanische Festigkeit des gesinterten Festelektrolyten vermindert werden.

Ein wichtiges Merkmal des Schichtsystems nach der Erfindung ist die außerordentlich feine Kristallstruktur des Ausgangspulvers für die Formgebung. Es besteht im wesentlichen aus Nanokristalliten mit einem mittleren Durchmesser von <100nm, vorzugsweise von 5 bis 40 nm.

Gesinterte Schichtsysteme nach der Erfindung zeichnen sich, wie bereits gesagt, durch vergleichsweise hohe spezifische Leitfähigkeiten aus. Deren Werte hängen von der Zusammensetzung der Festelektrolyte, den Sinterbedingungen und natürlich von der Temperatur ab. Bei Zirkon(IV)-oxid, das mit Yt-terbium(III)-oxid stabilisiert wurde, liegen sie um etwa ein Größenordnung höher als bei Festelektrolyten aus grobkörnigem Pulver unter sonst gleichen Bedingungen.

Man stellt die gesinterten Schichtsysteme nach der Erfindung aus den entsprechend feinteiligen Oxiden und den Stabilisatoren in einem Sinterverfahren her. Dabei geht man zweckmäßig von den stabilisierten Oxiden aus und überführt diese in entsprechend feine Form, d.h. Nanokristallite. Mehrere geeignete Verfahren sind bekannt. Die Vakuum-Verdampfung mit anschließender Konsolidierung (z.B. H. Gleiter, Phys.Bl. 47 (1991), 753 ff.) eignet sich inbesondere zur Herstellung kleiner Mengen. In gößeren Mengen können Nanokristallite nach den folgenden Verfahren hergestellt werden:
- Sol-Gel-Verfahren (z.B. Sangeta et al, J.Am.Ceram.Soc. 73 (1990), Seite 2760 ff. "Nanometer-sized Zr0₂ Particles Prepared by a Sol-Emulsion-Gel Method"). Dieses Verfahren eignet sich auch zur gemeinsamen Abscheidung, beispielsweise von Zirkon(IV)-oxid und Yttrium(III)-oxid.
- Hochenergiemahlen (z.B. Fecht in "Nanostructured Materials", Vol.1, Nr.2, (1992)). Das Verfahren ist dort nur für Metalle beschrieben, wird inzwischen aber auch für keramische Materialien verwendet : H. Grewe, W. Schlump, EP 0 339 366.
- Sprüh-Pyrolyse (G.L. Messing et al, J.Am.Ceram.Soc., Vol.73 (1990), Seite 61 ff.)
- Spark Erosion for Fine Particle Production, Vortrag von A.E.Berkowitz, First International Conference on Nanostructured Materials, 21.-28.09.1992, Cancun, Mexiko.

Nanokristallite bestehen aus einem kristallinen Kern, der im unteren Größenbereich u.U. nicht mehr als 10³ bis 10⁴ Atome umfaßt und an der Peripherie quasiamorph ist, d.h. ein mehr oder weniger stark gestörtes Gitter aufweist. Die Störung macht sich einerseits im Röntgenbeugungsspektrum bei niedrigen Beugungswinkeln durch eine Verbreiterung der Basis der Banden bemerkbar. Sie läßt sich aber auch mittels REM, TEM oder durch Tunnelelektronenmikroskopie direkt nachweisen. Wegen der kleinen mittleren Durchmesser der Nanokristallite entfällt ein wesentlicher Teil des stabilisierten Oxids auf quasiamorphe, gittergestörte Bereiche. Darauf gehen die erwähnten vorteilhaften elektrischen und mechanischen Eigenschaften der Festelektrolyte nach der Erfindung zurück.

Wenn die Ausgangspulver "im wesentlichen" aus den Nanokristalliten bestehen, dann bedeutet dies, daß in geringem Umfang inerte Bestandteile oder Sinterhilfsmittel, wie Aluminiumoxid zugegen sein können.

Die Nanokristalle werden in üblicher Weise zu den Festelektrolyten gesintert. Zur Formgebung kann man sie anpasten, mit einem der bekannten organischen Bindemittel versehen und die Paste in Dünnschicht- oder Dickschichttechnik verformend verarbeiten. Beispielsweise kann man aus der Paste in Kombination mit anderen funktionalen Teilen, wie Elektroden aus Metall, Trägern, porösen oder gasdichten Schutzschichten, elektrochemische Bauelemente herstellen, z.B. Sensoren, Brennstoffzellen oder Pumpzellen. Natürlich sind auch Formkörper, wie Membranen, herstellbar, die nicht mit anderen funktionalen Teilen zu Bauelementen kombiniert sind. In jedem Falle folgt auf die Verformung ein Sinterschritt, der zu dem gesinterten Festelektrolyten nach der Erfindung führt. Man wendet dazu, je nach dem betreffenden Oxid eines 4-wertigen Metalles und nach dem eingesetzten Stabilisatoroxid, im allgemeinen Temperaturen von etwa 1.000 bis 1.600°C an. Für Zirkon(IV)-oxid liegt eine zugleich schonende und wirkungsvolle Sintertemperatur bei etwa 1.200°C,

Die Sinterzeit hängt wiederum von dem stabilisierten Oxid und der Sintertemperatur ab, sie liegt im allgemeinen bei 1 bis 10 Stunden Haltezeit bei der Maximaltemperatur, also ausschließlich der Aufheiz- und der Abkühlphase. Man arbeitet in der Regel bei Atmosphärendruck, kann jedoch auch erhöhten Druck anwenden, wenn ein besonders hohes Maß an Verdichtung erwünscht ist. Wie alle Sinterkörper zeigen auch die Schichtsysteme nach der Erfindung eine gewisse Porösität, was bei Verwendung in solchen Bauelementen von Vorteil ist, bei denen die Diffusion von Gasen eine Rolle spielt.

Bei dem Sintervorgang bleiben die erwähnten quasiamorphen Strukturen an der Oberfläche der Nanokristallite als quasiamorphe Phase zwischen den Nanokristalliten im Gefüge des Festkörperelektrolyten häufig erkennbar erhalten, wenn auch unter den Sinterbedingungen eine Veränderung in Richtung auf höhere Ordnungsgrade stattfinden dürfte. Die gesinterten Festelektrolyte weisen insbesondere dann eine Nanokristallit-Struktur auf, wenn schonende Sinterbedingungen gewählt werden, beispielsweise Temperaturen bis zu etwa 1.200°C.

Es ist bemerkenswert, wie fest sich das stabilisierte nanokristalline Oxid beim Sintern mit etwaigen anderen funktionale Teilen verbindet. Es eignet sich daher vorzüglich für die Co-sintertechnik.

## Patentansprüche

1. Gesintertes Schichtsystem aus einem Festelektrolyten mit hoher Sauerstoffionenleitfähigkeit auf der Basis von Oxiden 4-wertiger Metalle und von Stabilisatoroxiden und mindestens einer Funktionsschicht, welche ein Gemisch aus dem Material des Festelektrolyten und mindestens einem weiteren Material enthält, dadurch gekennzeichnet, daß das Festelektrolytmaterial aus Nanokristalliten mit einem mittleren Durchmesser von <100 Nanometer besteht.

2. Schichtsystem nach Anspruch 1, dadurch gekennzeichnet, daß die Funktionsschicht eine Cermet-Elektrodenschicht ist.

3. Schichtsystem nach Anspruch 1, dadurch gekennzeichnet, daß das Stabilisatoroxid Scandium(III)-oxid ist

4. Schichtsystem nach Anspruch 1, dadurch gekennzeichnet, daß das Festelektrolytmaterial Zirkon(IV)-oxid, Hafnium(IV)-oxid und/oder Cer(IV)-oxid als Oxid(e) 4-wertiger Metalle enthält.

5. Schichtsystem nach Anspruch 1, dadurch gekennzeichnet, daß das Schichtsystem co-gesintert ist.

## Claims

1. Sintered layer system comprising a solid electrolyte having a high oxygen-ion conductivity and based on oxides of tetravalent metals and stabilizer oxides, and at least one functional layer which comprises a mixture of the material of the solid electrolyte and at least one further material, characterized in that the solid electrolyte material comprises nanocrystallites having a mean diameter of <100 nanometers.

2. Layer system according to Claim 1, characterized in that the functional layer is a cermet electrode layer.

3. Layer system according to Claim 1, characterized in that the stabilizer oxide is scandium(III) oxide.

4. Layer system according to Claim 1, characterized in that the solid electrolyte material comprises zirconium(IV) oxide, hafnium(IV) oxide and/or cerium(IV) oxide as oxide(s) of tetravalent metals.

5. Layer system according to Claim 1, characterized in that the layer system is cosintered.

## Revendications

1. Système stratifié fritté composé d'un électrolyte solide avec une haute conductivité d'ions oxygènes à base d'oxydes métalliques tétravalents et d'oxydes stabilisants et d'au moins une couche fonctionnelle, qui contient un mélange du matériau de l'électrolyte solide et d'au moins un autre matériau,
caractérisé en ce que
le matériau d'électrolyte solide se compose de nanocristallites ayant un diamètre moyen de <100 nanomètres.

2. Système stratifié selon la revendication 1,
caractérisé en ce que
la couche fonctionnelle est une couche d'électrode de Cermet.

3. Système stratifié selon la revendication 1,
caractérisé en ce que
l'oxyde stabilisant est l'oxyde de scandium (III).

4. Système stratifié selon la revendication 1,
caractérisé en ce que
le matériau de l'électrolyte solide contient de l'oxyde de zirconium (IV), de l'oxyde d'hafnium (IV) et/ou de l'oxyde de cérium (IV) comme oxydes métalliques tétravalents.

5. Système stratifié selon la revendication 1,
caractérisé en ce que
le système stratifié est co-fritté.
